**Europäisches Patentamt**

**European Patent Office**

**Office européen des brevets**

(19)

(11) Veröffentlichungsnummer: **0 065 218**

**B1**

(12) # EUROPÄISCHE PATENTSCHRIFT

(45) Veröffentlichungstag der Patentschrift:
**03.09.86**

(51) Int. Cl.⁴: **B 60 R 9/04**

(21) Anmeldenummer: **82103893.2**

(22) Anmeldetag: **05.05.82**

(54) **Trägeranordnung.**

(30) Priorität: **07.05.81 DE 8113476 U**

(43) Veröffentlichungstag der Anmeldung:
**24.11.82 Patentblatt 82/47**

(45) Bekanntmachung des Hinweises auf die Patenterteilung:
**03.09.86 Patentblatt 86/36**

(84) Benannte Vertragsstaaten:
**AT BE CH DE FR GB IT LI LU NL SE**

(56) Entgegenhaltungen:
**DE-A-2 832 298**
**DE-A-2 910 895**
**FR-A-1 090 070**
**GB-A-2 054 495**

(73) Patentinhaber: **Möbius, Ulrich, Fraunhoferstrasse 45, D-6450 Hanau (DE)**

(72) Erfinder: **Möbius, Ulrich, Fraunhoferstrasse 45, D-6450 Hanau (DE)**

(74) Vertreter: **Stoffregen, Hans- Herbert, Dr. Dipl.- Phys., Patentanwälte Strasse & Stoffregen Salzstrasse 11a Postfach 2144, D-6450 Hanau/Main 1 (DE)**

LIBER, STOCKHOLM 1986

EP 0 065 218 B1

## Beschreibung

Die Erfindung bezieht sich auf eine Trägeranordnung zur Aufnahme von auf einem Kraftfahrzeugdach aufzubringenden Lasten gemäß Oberbegriff des Anspruchs 1.

Der DE-A-28 32 298 ist eine entsprechende Trägeranordnung zu entnehmen, die zwei jeweils nur an den Fahrzeugdachrinnen zu befestigende Tragelemente umfaßt. Jedes Tragelement ist zur Herabsetzung des Fahrwiderstandes strömungsgünstig ausgebildet und weist in seiner Längsrichtung eine Aufnahmeeinrichtung in Form einer Profilschiene auf. In diese können austauschbar Elemente wie Skihalter, Surfbretthalter, Gepäckbrückenabschnitte und ähnliches eingebracht werden.

Zwischen jedem Tragelement und dem Fahrzeugdach befindet sich ganzflächig zum Beispiel eine Gummistoffzwischenlage. Daraus ergibt sich, daß die Tragelemente stets individuell auf den Dachradius abgestimmt werden müssen. Ferner besteht durch die ganzflächige Auflage auf dem Kraftfahrzeugdach die Gefahr, daß dieses in den instabilen Zonen verformt wird, da die Lastübertragung über die gesamte Fläche erfolgt.

In der GB-A-20 54 495 ist eine zwei Tragelemente umfassende Trägeranordnung beschrieben, die unmittelbar auf einem Kraftfahrzeugdach aufliegt. Dabei erfolgt eine ganzflächige Lastabtragung also auch auf die instabilen Dachzonen, so daß bleibende Deformationen unvermeidlich sind. Die Längsränder der Tragelemente weisen Streifen aus Gummi auf, die ein Verkratzen der Dachoberfläche verhindern sollen.

Dem Anmeldungsgegenstand liegt nun die Aufgabe zugrunde, eine Trägeranordnung der zuvor beschriebenen Art so auszubilden, daß bei einfacher Konstruktion eine Befestigung auf Kraftfahrzeugdächern mit zwischen den Seitenbereichen vorhandenen instabilen Zonen möglich ist, ohne daß man Gefahr läuft, daß das Dach deformiert wird. Dabei soll die Trägeranordnung auch derart auf einem Kraftfahrzeugdach befestigbar sein, daß von jener eine Schwingungsübertragung auf das Dach nicht erfolgen kann.

Die Aufgabe wird durch den kennzeichnenden Teil des Anspruchs 1 gelöst. Ausgestaltungen ergeben sich aus den Unteransprüchen.

Durch den erfindungsgemäßen Vorschlag wird demzufolge eine Trägeranordnung zur Verfügung gestellt, die

1. eine bleibende Deformation des Kraftfahrzeugdachs ausschließt, da eine Kraftabtragung nur im Bereich der stabilen Zonen des Kraftfahrzeugdaches erfolgt;

2. eine Übertragung von Schwingungen auf das Kraftfahrzeugdach unterbindet, da die Gummileisten als Schwingungsabsorber wirken;

3. sicherstellt, daß ein Verrutschen auf dem Kraftfahrzeugdach unterbleibt, da die Gummileisten schwingungs- und damit stoßabsorbierend, also kraftverzehrend wirken;

4. karrosserieanpassungsfähig ist, da die Tragelemente nicht über ihre gesamte Grundfläche auf dem Kraftfahrzeugdach aufliegen, vielmehr erfolgt nur ein körperlicher Kontakt über die Gummileiste im vorderen und seitlichen Randbereich eines jeden Tragelementes;

5. den Strömungswiderstand eines Kraftfahrzeugs im Vergleich zu bügelartigen bekannten Anordnungen verringert. Dadurch ergibt sich eine Rollwiderstandsverringerung und demzufolge auch eine Kraftstoffeinsparung;

6. die Möglichkeit schafft, daß eine Befestigung sowohl an Kraftfahrzeugrinnen als auch an Kraftfahrzeugholmen möglich ist.

Die Erfindung wird nachstehend an Hand von in der Zeichnung dargestellten Ausführungsbeispielen näher erläutert.

Es zeigen:

Fig. 1 eine Ausführungsform eines Trägerelementes in Explosionsdarstellung,

Fig. 2 eine Trägeranordnung unter Verwendung eines Trägerelementes nach Fig. 1,

Fig. 3 eine modifizierte Trägeranordnung mit Trägerelementen nach Fig. 1,

Fig. 4 eine Detaildarstellung einer Trägerelementenbefestigung,

Fig. 5 eine weitere Detaildarstellung einer Trägerelementenbefestigung,

Fig. 6 eine vergrößerte Darstellung eines einen Trägerelementenrand aufnehmenden Gummielementes und

Fig. 7 eine perspektivische Darstellung einer Verwendungsform einer erfindungsgemäßen Trägeranordnung.

In den Figuren ist eine Trägeranordnung dargestellt, die zwei in Abstand und quer zur Längsrichtung des Kraftfahrzeuges verlaufende Tragelemente aufweist. Jedes Tragelement umfaßt ein plattenförmiges Basiselement 68, in dessen Längsrichtung eine vorzugsweise einen Schlitz 96 aufweisende Aufnahmeeinrichtung 94 verläuft, in die zum Beispiel strömungsgünstig ausgebildete höckerförmige Elemente 72 lösbar einbringbar sind. Das Basiselement 68 weist dabei an seinem vorderen und seitlichen Rand 112 eine umlaufende Gummileiste 70 auf, deren Ausbildung im Zusammenhang mit Fig. 8 näher beschrieben wird. Die Gummileiste 70 und das plattenförmige Basiselement, das als karrosserieanpassungsfähige Dachplatte bezeichnet werden kann, bilden demzufolge die Basis für eine Trägeranordnung, die den Strömungswiderstand eines Kraftfahrzeuges nur unwesentlich beeinflußt und aufgrund ihrer geringen Höhe kaum wahrnehmbar ist. Dies kann dadurch unterstützt werden, daß das Basiselement 68 in der Farbgebung dem Kraftfahrzeug angepaßt ist.

Die Basisplatte 68 wird über aus den Seitenflächen im Abstand zu dem Kraftfahrzeugdach herausragende und relativ zu diesen verschiebbaren Befestigungselementen auf dem Kraftfahrzeugdach derart befestigt, daß die lastaufnehmende Abstützung im Seitenbereich des Kraftfahrzeugdaches erfolgt, so daß dieses trotz des aufliegenden Basiselementes 68 eine Verformung -eine Durchbiegung- nicht erfährt, so daß auch ein Entlangführen auf einem Kunststoff- oder Acrylglasdach gefahrlos möglich ist.

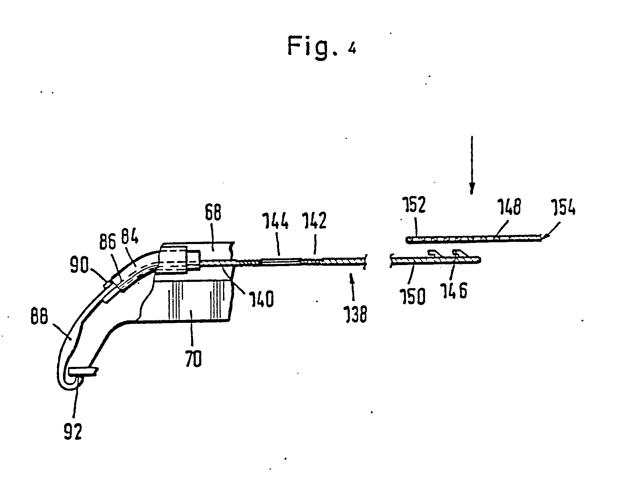

Die Befestigungselemente bestehen im wesentlichen aus einem haken- oder klauenförmigem äußerem Element 88, welches mit seinem freien Ende 92 vorzugsweise in Linienpressung einen nicht dargestellten Holmen oder eine Dachrinne eines Kraftfahrzeuges unterfassen kann. An den Haken 88 schließt sich gelenkig ein vorzugsweise flexibles oder gegebenenfalls ein starres Element 86 an, welches über eine Führung 84 in das Innere des Basiselementes 68 geleitet wird, um dort über ein nicht dargestelltes Zugelement gespannt zu werden. Nähere Einzelheiten werden im Zusammenhang mit Fig. 4 erläutert.

Die gelenkige, eine Drehung um die Achse 90 ermöglichende verbindung zwischen dem Haken 88 und dem Element 86 ergibt den Vorteil daß zum Beispiel bei einem Unfall im Anlenkbereich eine Kraftabsorption derart erfolgt, daß ein Wegrutschen des erfindungsgemäßen Halteelementes kaum erfolgen dürfte.

Damit das Basiselement ohne wesentliche Beeinflussung der Aerodynamik Lasten abstützen, also zum Beispiel Gepäckbrücken, Fahrradhalter, Kofferboxen oder Surfbretthalter aufnehmen kann, werden die strömungsgünstig ausgebildeten Elemente 72 in den Schlitz 96 eingebracht. Dieser Schlitz ist Teil der Aufnahmevorrichtung 94, welches in das Basiselement 68 eingelassen ist und vorzugsweise von einem U-förmig ausgebildeten Profilmaterial mit einander zugewandten freien Enden der Schenkel gebildet wird; Ferner ist erkennbar, daß in den äußeren Randbereichen der Aufnahmeeinrichtung 94, jedoch im Abstand zu deren jeweiligen freien Enden, eine Schlitzerweiterung 98 erfolgt, deren Funktion nachstehend näher beschrieben wird.

In den Schlitz 96 können lösbar die Elemente 72 aneinandergereiht oder im Abstand zueinander eingebracht werden. Weisen die Elemente 72 zueinander einen Abstand auf, so kann dieser so gewählt werden, daß zwischen diesen zum Beispiel Lasten wie z. B. Skier angeordnet werden können.

Das Element 72, das im Schnitt vorzugsweise eine Keilform zeigt, weist anströmseitig eine konvexe Fläche auf, die in zwei zueinander versetzt verlaufende hintere Flächen 108 und 110 übergeht, die gleichfalls konvex oder geradlinig oder nahezu geradlinig verlaufen können. Der Übergang zwischen den Flächen 108 und 110 bildet eine vorzugsweise horizontal verlaufende Stufe 106 (Zu erwähnen ist in diesem Zusammenhang, daß die auf dem vorderen bzw. dem hinteren Basiselement anzuordnenden Elemente nicht identisch ausgebildet sein müssen).

Entlang der Stufe 106 kann nun ein horizontaler Schenkel 116 eines U-förmigen Bügels 74 bzw; 76 verlaufen, um somit zum einen eine Unverrückbarkeit der Elemente 72 zu gewährleisten und zum anderen in zwischen zueinander beabstandete Elemente eingebrachte Skier o.ä. gegen ein ungewolltes Entfernen zu sichern.

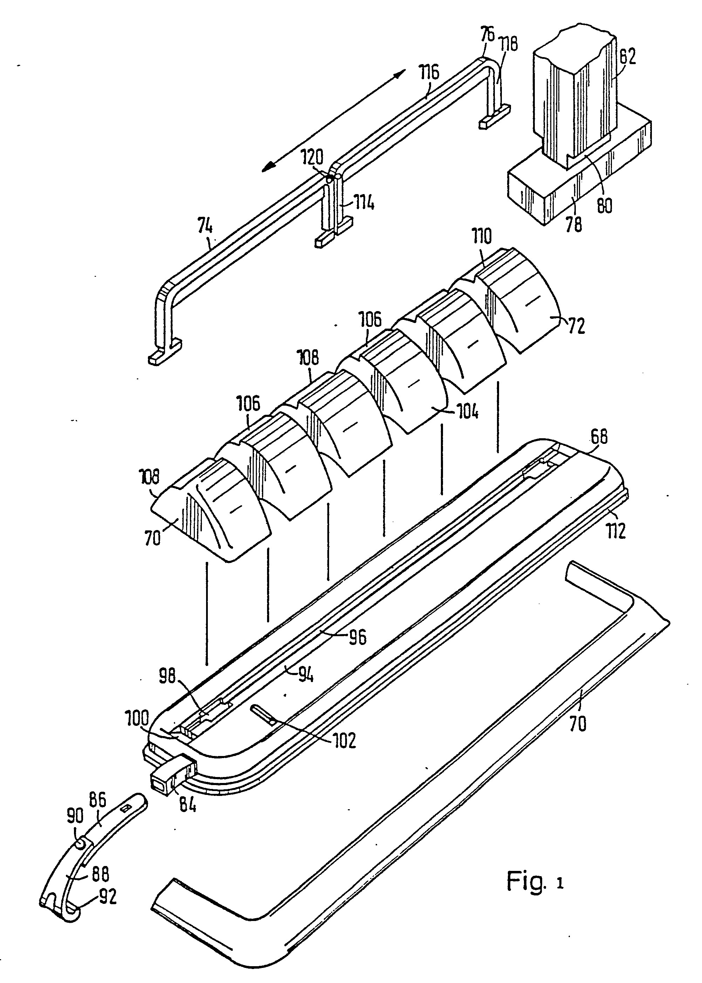

Die U-förmigen Bügel weisen dabei Fußenden 78 auf, deren Flächen etwa den Schlitzerweiterungen 98 entsprechen. Mit anderen Worten muß das Fußende 78 in die Schlitzerweiterung 98 eingebracht werden, in Richtung auf den Boden der Aufnahmeeinrichtung 94 bewegt werden, damit eine Bewegung entlang des Schlitzes 96 erfolgen kann. Zu diesem Zweck schließt sich an das Fußende 78 eine Verjüngung 80 an. Demzufolge entspricht die Tiefe der Verjüngung 80 der Schlitzbreite und die Höhe der Verjüngung 80 in etwa der Stärke des profilmaterials im Schlitzbereich; An die Verjüngung 80 schließt sich ein vertikal verlaufender Schenkel des U-förmigen Bügels 74 oder 76 an. In der vergrößerten Darstellung von Fig. 1 ist dieser vertikal verlaufende Schenkel allgemein mit dem Bezugzeichen 82 versehen, der in der Darstellung des Bügels 76 dem Schenkel 114 oder 118 entspricht.

Das Einbringen der Elemente 72 und der Bügel 74 und 76 erfolgt nun folgendermaßen. Zunächst wird das Fußende des vertikal verlaufenden Schenkels 114 in die Schlitzerweiterung 98 eingesetzt und entlang des Schlitzes 96 bewegt. Sodann können die Elemente 72 eingeschoben werden, die an ihrer Grund(boden)fläche nicht dargestellte Vorsprünge aufweisen, die mit der Aufnahmeeinrichtung 94 derart korrespondieren, daß ein ungewolltes Entfernen nicht erfolgen kann. Nachdem die Elemente 72 im gewünschten Abstand zueinander eingebracht sind, kann das Fußende des äußeren vertikal verlaufenden Schenkels 98 in die Schlitzerweiterung 98 eingebracht werden, so daß der horizontal verlaufende Schenkel 116 an den horizontalen Abschnitten (Stufen) der Elemente 72 anliegt; Sodann kann der Bügel 76 in Richtung auf das äußere Ende der Aufnahmeeinrichtung 94 verschoben werden, so daß die Fußfläche 98 nicht mehr lotrecht zu der Schlitzerweiterung 98 ausgerichtet ist, also ein Entfernen des Bügels nicht mehr möglich ist.

Wie die Fig. 1 verdeutlicht, sind zum Befestigen der Elemente 72 zwei Bügel 74 und 76 vorgesehen. Selbstverständlich kann auch ein einziger Bügel die gleiche Funktion ausüben.

Sobald die Bügel 74 und 76 mit den von diesen zu überspannenden Elementen 72 festgelegt worden sind, können die Bügel 74 bzw. 76 entsprechend des angedeuteten Pfeils nach links oder rechts verschoben werden. Dabei ist die längliche Erstreckung der Bügel 74 und 76 derart gewählt, daß bei Erreichen einer Endposition (d.h., wenn der linke vertikal verlaufende Schenkel des Bügels 74 bzw. sein Fußpunkt ganz nach links verschoben ist bzw. der Fußpunkt des Schenkels 118 ganz nach rechts verschoben ist), zum einen die Bügel aus dem Schlitz nicht mehr entfernbar sind und zum anderen die der Endposition gegenüberliegende Schlitzerweiterung 98 freigegeben wird, so daß diese zum Beispiel mit einem Schloß versehen werden kann. Das bedeutet, daß zur Diebstahlsicherung der auf dem Basiselement aufgebrachten Lasten bzw. Lastaufnahmeeinrichtungen pro Tragelement nur ein Absperrorgan in Form eines Schlosses erforderlich ist, wohingegen bei den bekannten Tragelementen an jeder Seite eine Verschlußeinrichtung erforderlich ist.

Selbstverständlich ist es zur Erzielung dieses Vorteils erforderlich, daß die Abstandsveränderung der aus den Seitenflächen des Basiselementes 68 herausragenden Befestigungselemente 86, 88, nur dadurch möglich ist, daß das nicht dargestellte und im Zusammenhang mit Fig. 4 näher erläuterte Zugelement durch Wechselwirkung mit einem in den Basiselementinnenraum einführbaren Werkzeug verstellbar ist. Im Ausführungsbeispiel erfolgt dieses über einen Schlitz 102, der im fertig moniierten mit den Elementen 72 und den Bügeln 74 und 76 versehenen Basiselement 68 von einem Element 72 verdeckt ist. Auch sei erwähnt, daß das Werkzeug zum Verstellen des Zugelementes vorzugsweise eine spezielle Formgebung aufweist und demzufolge der Schlitz 102 eine dieser angepaßte Form zeigt, so daß mit üblichen Werkzeugen eine Beeinflussung des Zugelementes nicht erfolgen kann, so daß selbst bei nicht vorhandenem Element 72 eine Diebstahlhemmung gegeben ist.

Gleichfalls besteht die Möglichkeit, daß die Elemente 72 nicht unbedingt über die Schlitzerweiterung 98 in die Aufnahmeeinrichtung 94 eingeführt werden müssen, sondern daß dies über rampenförmige Übergänge 100 erfolgen kann, die durch an den äußeren Enden der Aufnahmeeinrichtung 96 angrenzende im Basiselement 68 vorhandene Vertiefungen gebildet werden.

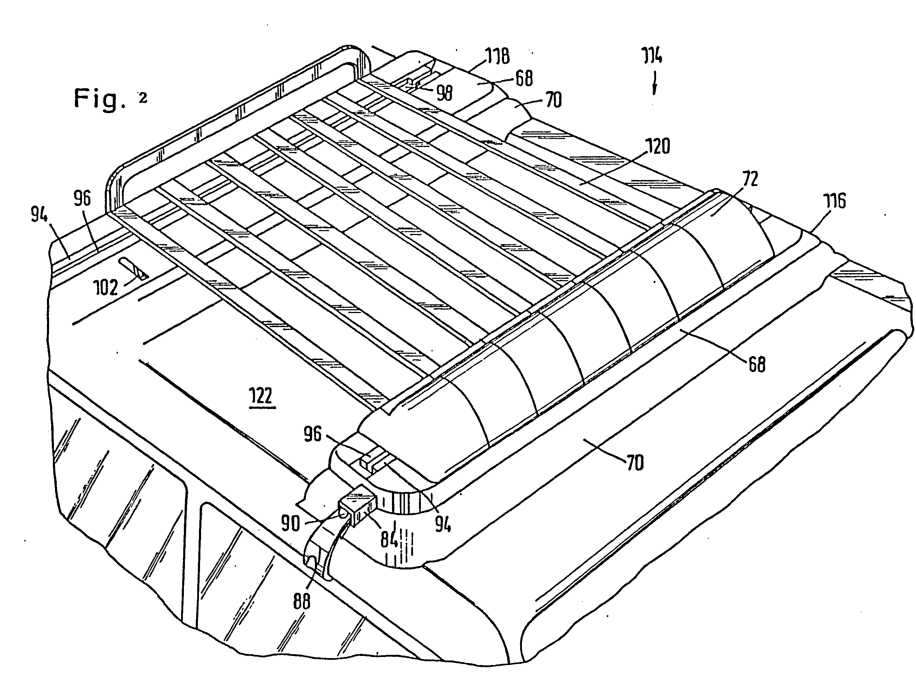

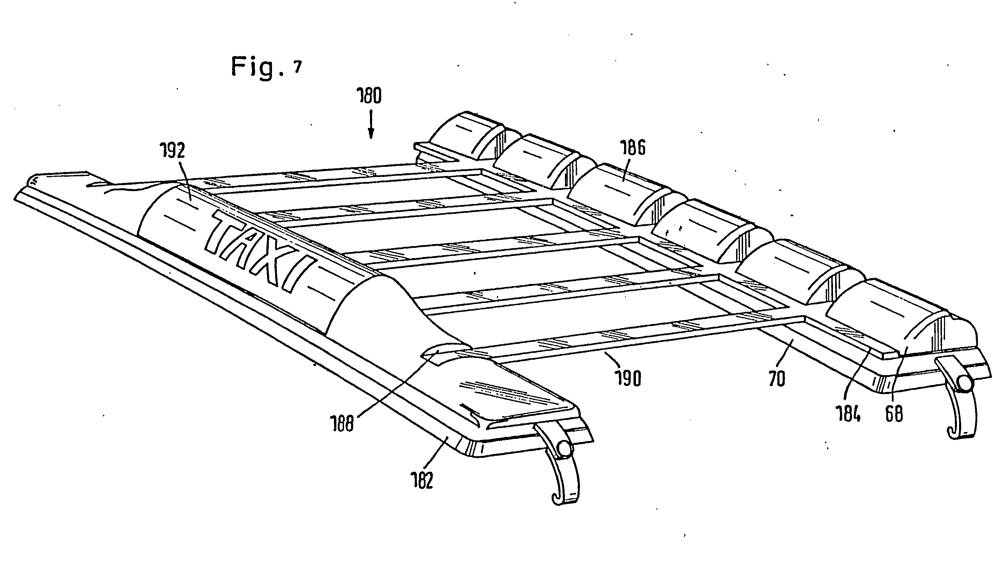

Zu der nachfolgenden Beschreibung der Fig. 2 und 7 sei erwähnt, daß in Bezug auf Fig. 1 gleiche Elemente gleiche Bezugszeichen erhalten.

In Fig. 2 ist in schematischer Darstellung eine Trägeranordnung 114 wiedergegeben, die sich aus einem vorderen Tragelement 116 und einem hinteren Tragelement 118 zusammensetzt. Dabei weist jedes Tragelement 116, 118 einen Aufbau auf, wie er in Fig. 1 beschrieben ist. Gleiches gilt hinsichtlich der Befestigung mit dem Kraftfahrzeugdach 122. Das heißt, daß die Haken oder Klauen 88 Seitenholme bzw. Ränder des Daches 122 vorzugsweise in Linienpressung hintergreifen.

Die Trägeranordnung 114 soll im Ausführungsbeispiel zur Aufnahme einer Gepäckbrücke 120 dienen. Zu diesem Zweck greifen nicht dargestellte Vorsprünge in die Schlitze 96 der Aufnahmeeinrichtung 94 ein.

Zusätzlich sind am vorderen Tragelement 114 die strömungsgünstig ausgebildeten Elemente 72 vorgesehen, damit die Aerodynamik durch die Gepäckbrücke 120 und gegebenenfalls aufgebrachter Lasten nicht negativ beeinflußt wird. Zu diesem Zweck sind die Elemente 72 auf dem vorderen Basiselement aneinandergrenzend und nicht im Abstand zueinander angeordnet, so daß diese eine geschlossene Fläche bilden, also das Basiselement 68 mit dem ihn aufnehmenden umlaufenden Gummi 70 und den Elementen 72 in etwa einen Körper bildet. Ist das hintere Tragelement 118 in der Darstellung nicht mit den Elementen 72 versehen, so können selbstverständlich in diesem Bereich entsprechende Elemente angeordnet werden; Dabei brauchen die am Tragelement 118 angeordneten Elemente selbstverständlich nicht identisch zu den vorderen Elementen 72 gewählt zu sein.

Auch erkennt man aus der Darstellung der Fig. 2, daß der am vorderen Basiselement 68 zum Verstellen der Befestigungselemente 88 eingelassene Schlitz 102 durch ein Element 72 abgedeckt ist, wohingegen der am hinteren Basiselement 68 vorhandene Schlitz 102 offen ist. Dadurch erfolgt jedoch keine Diebstahlgefährdung, da zum einen das vordere Tragelement 116 diebstahlgesichert ist und zum anderen -wie erwähnt- der Schlitz 102 eine spezielle Form aufweist, so daß ein übliches Werkzeug nicht eingeführt werden kann.

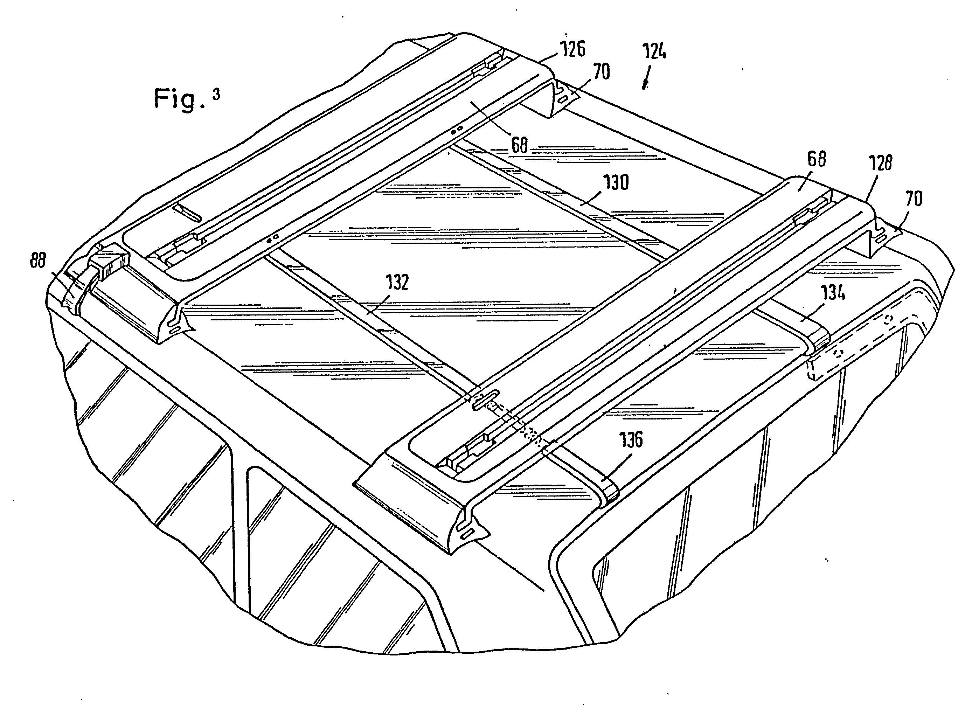

In Fig. 3 ist eine Trägeranordnung 124 dargestellt, die für einen zwei Seitentüren aufweisenden personenkraftwagen bestimmt ist, der keine Dachrinnen aufweist, also bei dem die Befestigungselemente 88 die Dachränder umgreifen müssen. Daraus wird erkennbar, daß nur das vordere Tragelement 126 in einer Art an dem Kraftfahrzeugdach befestigt werden kann, wie sie im Zusammenhang mit den Fig. 1 und 2 beschrieben wird. Das hintere Tragelement 128 wird nach der Ausführungsform nach Fig. 3 über parallel zur Kraftfahrzeuglängsachse verlaufende Verstrebungen 130 und 132 mit dem vorderen Tragelement 126 verbunden. Ferner laufen Verstrebungen 134 und 136 in den Heckbereich des Kraftfahrzeuges, um dort bei vorhandener Hecktür im oberen Rahmenbereich der Hecktüröffnung festgelegt zu werden. Dabei können die Verstrebungen 130 und 134 bzw. 132 und 134 gleichfalls über im Basiselementinneren verlaufende Zugelemente verbunden sein, so daß eine Anpassung an verschiedene Kraftfahrzeugtypen gegeben bzw. der Abstand zwischen dem vorderen und hinteren Tragelement 126 bzw. 128 frei einstellbar ist; Ansonsten entspricht der Aufbau der Tragelemente 126 bzw. 128 dem der Fig. 1.

Da die Trägeranordnung 124 nach Fig. 3 von der Rückseite her dargestellt ist, wird gut erkennbar, daß die Basiselemente 68 schalenförmig mit weggelassenem heruntergezogenem hinterem Rand ausgebildet sind. Auch ist zu beobachten, daß die Gummileiste 70 die heruntergezogenen Seitenränder und den Vorderrand umfaßt. Dies hat unter anderem den Vorteil, daß materialmäßig eine Einsparung erfolgt, ohne daß die Funktionstüchtigkeit der Tragelemente beeinflußt wird. Zum anderen bildet sich unterhalb des Basiselementes 68 kein geschlossener Hohlraum aus, der gegebenenfalls dazu führen könnte, daß das Kraftfahrzeugdach in diesem Bereich zur Rostbildung neigt.

Die zum Befestigen des Basiselementes 68 erforderlichen Befestigungseinrichtungen sind in Schnittdarstellung in Fig. 4 näher dargestellt. Erkennbar wird das angedeutete Basiselement 68 von dem bereits mehrfach erwähnten Zugelement 138 durchsetzt, welches an seinem vorderen Ende starr ausgebildet ist und über die Führung 84 nach außen geleitet wird, um in den Haken bzw. Klauen 88 überzugehen, die mit seinem bzw. ihren vorderen freien Enden 92 vorzugsweise in Linienpressung einen Fahrzeugdachrand bzw. eine Fahrzeugdachrinne unterfaßt. Ferner erkennt man, daß der Übergang zwischen dem starren Teil 86 des Zugelementes 138 und dem Haken 88 eine gelenkige Verbindung 90 gegeben ist, um bei einem Unfall die erwähnte Kraftabsorption zu ermöglichen. An den starren Abschnitt 86 schließen sich flexible Abschnitte 140 und 142 an, die über eine Gewindehülse 144 miteinander verbunden sind. An den flexiblen Abschnitt 142 schließen sich sodann erneut starre Abschnitte 146 und 148 an, von denen der Abschnitt 146 Vorsprünge 150 und der Abschnitt 148 zugeordnete Ausnehmungen 152 aufweisen.

Der Abschnitt 148 kann dann erneut in einen flexiblen Abschnitt übergehen, um in einem dem Abschnitt 86 entsprechenden Abschnitt zu münden. Alternativ dazu kann das rechte freie Ende des Abschnitts 148 der nach außen ragende Abschnitt sein.

Die Abschnitte 146 und 148 mit den zugeordneten Vorsprüngen 150 und 152 eröffnen die Möglichkeit, den Abstand zwischen den nach außen ragenden Haken bzw. Klauen 88 grob einzustellen. Zu diesem Zweck muß zunächst der Abschnitt 148 von dem Abschnitt 146 gelöst werden, um einen Abstand zwischen den Haken bzw. Klauen 88 zu erzielen, der größer als die Befestigungspunkte am Kraftfahrzeugdach sind. Sodann wird der Abschnitt 148 in Richtung des pfeils 154 bewegt. Das bedeutet, daß die Ausnehmungen 122 über die Vorsprünge 150 gleiten. Durch die Ausbildung der Vorsprünge 150, die wie Widerhaken wirken, besteht die Möglichkeit, den Abschnitt 148 in Pfeilrichtung 154 widerstandslos zu bewegen. Würde man entgegen der Pfeilrichtung 154 den Abschnitt 148 bewegen, so rasten die Vorsprünge 150 in die Ausnehmungen 152 fest ein, so daß ein weiteres Verändern nicht möglich ist. Nachdem durch Zusammenwirken der Abschnitte 146, 148 bzw. der Vorsprünge und Ausnehmungen 150, 152 eine Grobeinstellung gegeben ist, kann der Endabstand zwischen den Haken bzw. Klauen 88 über die die flexiblen Abschnitte 140, 142 verbindende Gegengewindehülse 144 oder ein entsprechend wirkendes Element erfolgen. Um dies zu ermöglichen, muß die Gegengewindehülse 144 zum Beispiel von einem speziell ausgebildeten Schlüssel erfaßt werden, der in das Innere des Basiselementes bzw. des Körpers 12, 14 durch den bereits im Zusammenhang mit den Fig. 1 und 2 erwähnten Schlitz 102 eingeführt zu werden. Dabei sollte die Gegengewindehülse eine Begrenzung der Drehmomentenbeeinflussung durch das Werkzeug aufweisen, um ein zu starkes Anziehen und damit gegebenenfalls auftretendes Verformen des Kraftfahrzeugdaches auszuschließen.

Durch die erfindungsgemäße Ausbildung des Zugelementes 138 und den nach außen geführten Befestigungselementen 86 und 88 und deren gelenkige Verbindung ist eine bei einfacher Handhabung überaus funktionstüchtige und sicher wirkende Befestigungseinrichtung zum Festlegen der erfindungsgemäßen Tragelemente auf einem Kraftfahrzeugdach gegeben.

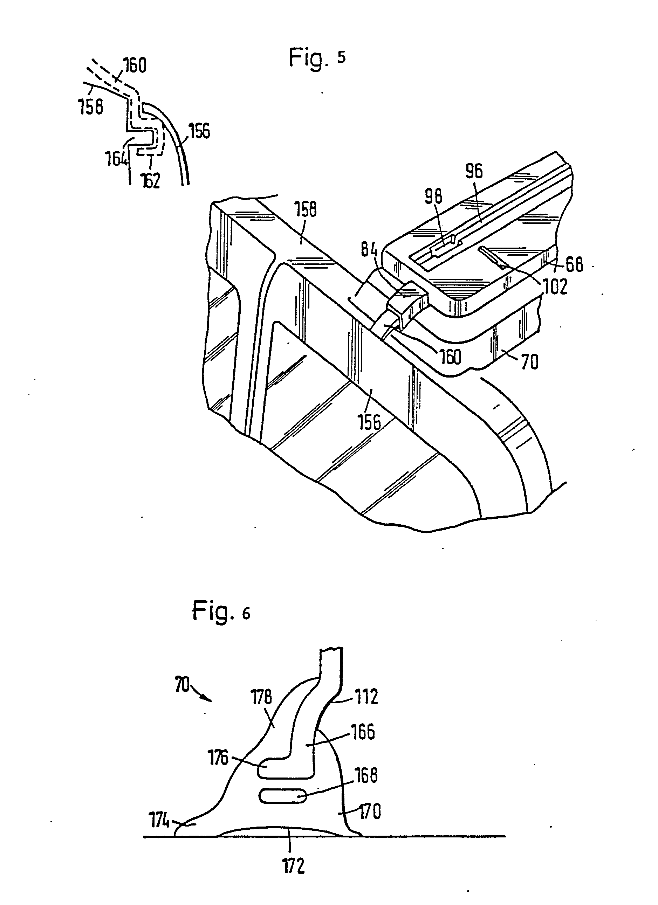

Um die Trägeranordnung auch für Kraftfahrzeuge verwenden zu können, die übergreifende Türversionen aufweisen, können die aus dem Basiselement 68 bzw. den Körpern 12 und 14 herausragenden Befestigungselemente eine Ausbildung erfahren, wie sie in Fig. 5 dargestellt ist. Wie die Detaildarstellung eine Zuordnung von einer Kraftfahrzeugtür 156 und dem angrenzenden Rahmen 158 zeigt, wölbt sich das obere Ende der Tür 156 kontinuierlich in Richtung des Kraftfahrzeugdaches 158. In einem solchen Fall würde eine Befestigungsart, wie sie im Zusammenhang mit den Fig. 1 bis 4 beschrieben ist, nicht möglich sein. Um jedoch auch für entsprechende Kraftfahrzeuge eine Verwendung der erfindungsgemäßen Trägeranordnung sicherzustellen, wird das freie Ende der Befestigungselemente 160 derart ausgebildet, daß sich eine U-förmig ausgebildete Nut vorzugsweise durch Verformen des freien Endes ergibt, die einen am Kraftfahrzeugrahmen vorhandenen Vorsprung 164 aufnimmt. Dadurch ist ein sicherer Halt des Tragelementes bei gespanntem Zugelement gegeben, ohne daß weitere Sicherungen nötig sind. Durch eine entsprechende Befestigungsart ergibt sich eine zusätzliche Diebstahlsicherung, da der Befestigungspunkt von dem oberen Rand der Tür 156 abgedeckt, also nicht frei zugänglich ist.

Die zumindest die Seitenränder und den Vorderrand 112 des Basiselementes 68 bzw. der Körper 12 und 14 umfassende Gummileiste 70 ist in Fig. 6 vergrößert dargestellt, um die erfindungswesentlichen Merkmale besser erkennen zu können.

Das Gummielement 70 weist bei eingelassenem Rand 112, welcher von einem horizontal in etwa parallel zu einem Fahrzeugdach verlaufenden äußeren Abschnitt 176 in einen steil ansteigend ausgebildeten Abschnitt 166 übergeht, einen gekrümmten Bodenbereich 172 auf, der in einen vorderen Schenkel 174 und einen hinteren Schenkel 170 übergeht, von denen der vordere länger ausgebildet ist. Durch die Krümmung des Bodens 172 ergibt sich bei Aufliegen auf einem Kraftfahrzeugdach eine Saugwirkung, die eine Unverrutschbarkeit der das Basiselement 68 bzw. die Körper 12 und 14 aufnehmenden Gummileiste 70 sicherstellt.

Ferner verläuft die äußere Fläche des hinteren Schenkels 170 vorzugsweise steiler als die wellig ausgebildete äußere Fläche des vorderen Schenkels 174. Auch ist zwischen dem gebogenen Bodenbereich 172 und der L-förmigen Ausnehmung für den Basiselementenrand 112 ein Hohlraum 168 vorgesehen, der als Stoßdämpfer wirkt. Schließlich ist erkennbar, daß der vordere Schenkel 174 im Bereich des Randes 112 eine Verstärkung 178 aufweist, die zum einen eine Anpassung an den Übergang des Randes 112 vom horizontalen zum vertikalen Abschnitt ermöglicht und zum anderen eine Vorspannung des Schenkels 174 in Richtung des aufzunehmenden Randes 112 sicherstellt. Sofern nun eine erhöhte Kraftbeeinflussung in Richtung des vorderen Schenkels 174 erfolgt, so bewirkt zum einen der Hohlraum 168 eine Kraftabsorption und zum anderen die wulstartige Verstärkung 178, daß ein Widerstand der Kraft entgegengesetzt wird, so daß ein Herausgleiten des Randes 112 aus der Gummileiste 70 weitgehend unterbunden ist.

Schließlich ist in Fig. 7 in perspektivischer Darstellung eine weitere Anwendungsmöglichkeit bzw. Ausführungsform einer Trägeranordnung 180 dargestellt, die sich im wesentlichen aus den Elementen zusammensetzt, die im Zusammenhang mit Fig. 2 dargestellt sind. Dabei weist jedoch das vordere Tragelement 182 einen austauschbaren Einsatz 192 in Form eines Hinweisschildes wie "Taxi" oder Reklameschilder oder ähnliches auf. Dieses austauschbare Element 192 ist ebenfalls strömungsgünstig ausgebildet, damit die durch die erfindungsgemäße Lehre erzielten Vorteile, die sich insbesondere in einer vorteilhaften Aerodynamik, einfache Konstruktion, Energie- und damit Kraftstoffersparnis äußern, nicht negativ beeinflußt werden. Ferner erkennt man, daß das vordere Tragelement 182 schlitzförmige Ausnehmungen 188 aufweist, in denen zum Beispiel Elemente einer Gepäckbrücke 190 eingebracht werden können. Das hintere Tragelement 184 entspricht dem Aufbau der Fig. 1 vollständig, d.h., daß neben dem Basiselement 68 Elemente 186 eingelassen sind, die den Elementen 72 entsprechen, wobei zwischen den Elementen 186 ein Abstand gewählt ist, um die Enden der Gepäckbrücke 190 in den nicht dargestellten Schlitz des Basiselementes 68 einbringen zu können.

Ist die Kontur des vorderen Tragelementes 130 von außen beginnend flach ansteigend gewählt, so kann selbstverständlich jede andere Form gleichfalls gewählt werden, durch die die gewünschte positive Strömungsbeeinflussung gegeben ist.

Durch die Darstellung der Fig. 7 wird erneut deutlich, welche vielfältigen Anwendungsmöglichkeiten die erfindungsgemäße Trägeranordnung erfahren kann. Auch konnte in den Ausführungsbeispielen nur ein geringer Anwendungsbereich der Erfindung aufgezeigt werden, wodurch diese in ihrem Umfang jedoch keine Einschränkung erfahren hat.

**Patentansprüche**

1. Trägeranordnung zur Aufnahme von auf ein Kraftfahrzeugdach aufzubringenden Lasten mit vorzugsweise zwei im Abstand zueinander in Querrichtung zum Fahrzeugdach angeordneten und auf diesem liegenden Tragelementen (116, 118, 126, 128, 136, 138), die jeweils vorzugsweise seitlich an Fahrzeugdachrinnen festlegbar sind, wobei jedes Tragelement einen zur Herabsetzung des Fahrwiderstandes strömungsgünstig ausgebildeten Körper umfaßt, in dessen Längsrichtung eine Aufnahmeeinrichtung (94) vorzugsweise in Form einer Profilschiene zur austauschbaren Aufnahme von Elementen wie Skihaltern, Surfbretthaltern, Gepäckbrückenabschnitten und ähnlichem vorgesehen ist, und wobei zumindest teilweise zwischen dem Fahrzeugdach und dem jeweiligen Tragelement ein Gummielement (70) angeordnet ist,

    dadurch gekennzeichnet,

    daß jedes wahlweise an Fahrzeugdachrinnen oder Fahrzeugseitenholmen (158) befestigbare Tragelement (116, 118, 126, 128, 136, 138) ein plattenförmiges Basiselement (68) umfaßt und daß das Basiselement kraftfahrzeugdachseitig zur dichtenden Auflage auf dem Kraftfahrzeugdach (122) zumindest im Vorder- und Seitenbereich eine die vorderen und seitlichen Ränder des Basiselementes aufnehmende schwingungsabsorbierende Gummileiste (70) aufweist, über die die Lasten im wesentlichen nur auf die stabilen Seitenzonen des Kraftfahrzeugdaches übertragbar sind.

2. Trägeranordnung nach Anspruch 1,
    dadurch gekennzeichnet,
    daß der jeweilige vordere und seitliche Rand (112) des Basiselementes (68) von einem horizontal in etwa parallel zum Fahrzeugdach verlaufenden äußeren Abschnitt (176) ausgehend steil ansteigend (166) ausgebildet ist und daß die Gummileiste (70) dachseitig einen zur Erzielung einer Saugwirkung gekrümmten Bodenbereich (172) mit einem vorderen (längeren) und einem hinteren (kürzeren) Schenkel (174 bzw. 180) aufweist, daß die äußere Fläche des hinteren Schenkels vorzugsweise steiler als die vorzugsweise wellig ausgebildete äußere Fläche des vorderen Schenkels ist und daß die Schenkel über einen einen Hohlraum einschließenden Mittelbereich (168) in den Rand umschließende obere Schenkelbereiche übergehen, von denen der vordere Schenkel (174) zur Erzielung einer Vorspannung in Richtung auf das Basiselement eine wulstartige Verstärkung (178) aufweist.

3. Trägeranordnung nach Anspruch 1,
dadurch gekennzeichnet,
daß die Aufnahmeeinrichtung (94) ein in das Basiselement (68) vorzugsweise vollständig eingelassenes U-förmig ausgebildetes profilmaterial mit zur Bildung eines Schlitzes (96) einander zugewandten freien Enden der Schenkel ist, wobei der Schlitz vorzugsweise im Bereich der Enden der Aufnahmeeinrichtung (98) erweitert ist.

4. Trägeranordnung nach Anspruch 1,
dadurch gekennzeichnet,
daß die in die Aufnahmeeinrichtung (94) einbringbaren Elemente (72, 186, 192) anströmseitig strömungsgünstig ausgebildet sind, wobei jedes Element (72, 186, 192) im Schnitt eine Keilform aufweist, dessen anströmseitige (vordere) Fläche (104) konvex und dessen hintere aus zwei konvex und/oder nahezu gradlinig oder gradlinig verlaufenden Teilflächen (108, 110) gebildet ist, deren (stufenförmiger) Übergang ein horizontal oder nahezu horizontal verlaufender Abschnitt (106) ist.

5. Trägeranordnung nach Anspruch 1 und/oder Anspruch 3,
dadurch gekennzeichnet,
daß die Elemente (72, 186) in dem Schlitz (96) zueinander beabstandet angeordnet sind, daß die Elemente von zumindest einem Bügel (74, 76) überspannbar sind, der vorzugsweise an den horizontal oder nahezu horizontal verlaufenden Abschnitten (106) der Elemente anliegt, daß der Bügel U-förmig ausgebildet und an seinen freien Schenkeln (114, 118) Fußenden (78) aufweist, deren jeweilige Grundfläche in etwa der Abmessung der Schlitze in ihrem jeweiligen erweiterten Bereich (98) entspricht, und daß sich an den Fußenden jeweils ein verjüngter Abschnitt (80) anschließt, der eine Verschiebbarkeit des Bügels entlang des Schlitzes ermöglicht.

6. Trägeranordnung nach Anspruch 3 und/oder Anspruch 5,
dadurch gekennzeichnet,
daß die Schlitzerweiterungen (98) jeweils in einem Abstand zu den Schlitzenden angeordnet sind, daß der bzw. die Bügel (74, 76) derart in einen Endbereich des Schlitzes verschiebbar ist bzw. sind, daß nur eine der Schlitzerweiterungen (98) zugänglich und gegebenenfalls verschließbar ist.

7. Trägeranordnung nach Anspruch 1,
dadurch gekennzeichnet,
daß das Basiselement (68) auf dem Kraftfahrzeugdach (122) mittelbar oder unmittelbar über jeweils im Abstand zu dem Kraftfahrzeugdach seitlich aus dem Körper bzw. dem Basiselement herausragende und zu dem relativ verschiebbare Befestigungselemente (18, 20, 46, 68; 86, 88, 138) über zum Beispiel Haken oder Klauen insbesondere zur lastenaufnehmenden Abstützung im Seitenbereich des Kraftfahrzeugdaches festlegbar ist, die ihrerseits vorzugsweise über ein im Inneren des Körpers verlaufendes Zugelement (138) wie zum Beispiel einen Seilzug oder ein Gestänge verbunden sind, daß die vorzugsweise über eine Linienpressung (92) festgelegten Befestigungselemente (88) außerhalb des Basiselementes (68) gelenkig mit dem Zugelement (138) verbunden sind, daß das Zugelement zur Grobeinstellung des Abstands zwischen den Befestigungselementen gegeneinander verschiebbare erste Abschnitte (146, 148), von denen ein Abschnitt (146) Vorsprünge (150) und der andere Abschnitt (148) diesen zugeordnete Ausnehmungen (152) umfassen, und zur Feineinstellung zweite Abschnitte (140, 142) aufweist, die vorzugsweise über eine Gegengewindehülse (144) miteinander verbindbar sind.

## Claims

1. A carrier arrangement for the accommodating of goods to be carried on the roof of a motor vehicle, with preferably two carrying members (116, 118, 126, 128, 136, 138) being arranged at a distance to each other and in cross-direction to the car roof and lying on the said roof, said carrying members being able to be fixed preferably laterally to car roof gutters, whereby each carrying element comprises a body with a stream-lined design to prevent air resistance, in whose longitudinal direction a holding device (94) is provided, preferably in the form of a rubber strip to hold elements exchangeably, such as ski holders, surf board holders, baggage grids and such, and whereby a rubber element (70) is arranged at least partly between the car roof and the relevant carrying member,
characterised in that
each carrying element (116, 118, 126, 128, 136, 138), being able to be fixed by choice either to car roof gutters or car side pieces (158), comprises a plate-shaped base element (68) and that the base element on the car roof side has an oscillation absorbing rubber strip (70) at least in the front and at the sides which holds the front and side edges of the base element to enable direct lying on the car roof (122), via which rubber strip the loads can mainly only be transferred to the sturdy side areas of the car roof.

2. Carrying arrangement according to claim 1
characterised in that
the relevant front and side edge (112) of the base element is designed with a steep gradient (166) starting from a horizontal outside section (176) running roughly parallel to the car roof and that the rubber strip (70) has on the roof side a bevelled base area (172) to produce a suction effect with a front limb (longer) and a rear limb (shorter) (174 or 180 resp.), that the outer surface of the rear limb is preferably steeper than the preferably wavily- designed outer surface of the front limb and that the limbs merge in the edge enclosing upper limb areas via a middle area (168) including a cavity, the front limb (174) having a bulbous reinforcement to produce a pretension in the direction of the base element.

3. Carrying arrangement according to claim 1
characterised in that
the holding device (94) is a U-shaped mould material preferably set into the base element (68) completely with the free ends of the limbs facing each other to form a slit (96), the slit being extended preferably in the direction of the ends of the holding device (98).

4. Carrying arrangement according to claim 1
characterised in that
the elements (72, 186, 192) being able to be put into the holding device (94) are stream-lined on the on-coming air side, each element (72, 186, 192) having sectionally a wedge-form, whose on-coming air (front) surface (104) is convex and whose rear surface is formed from two convex and/or almost straight-lined or straight-lined part surfaces (108, 110), whose (graduated) transition is a horzontally or almost horizontally running section.

5. Carrying arrangement according to claim 1 and/or claim 3
characterised in that
the elements (72, 186) in the slit are arranged spaced out to each other, that the elements can be bridged by a strap (74, 76) which lies preferably in the sections (106) of the elements running horizontally or almost horizontally, that the strap is U-shaped and has foot ends (78) on its free limbs (114, 118), whose relevant basic surface roughly corresponds to the size of the slit in the relevant extended area (98), and that a tapered section (80) connects on each foot end which enables the strap to be moved along the slit.

6. Carrying arrangement according to claim 3 and/or claim 5
characterised in that
the slit extensions (98) are each arranged at a distance to the slit ends, that the strap(s) (74, 78) can be moved in the end areas of the slit so that only one of the slit extensions (98) can be reached and if necessary closed.

7. Carrying arrangement according to claim 1
characterised in that
the base element (68) can be fastened onto the car roof (122) either directly or indirectly via fastening means (18, 20, 46, 68; 86, 88, 138), each projecting laterally from the body or base element at a distance to the car roof and being able to be moved relative to the said body or base element, by means of hooks or claws for example, especially for the load-carrying support in the lateral region of the roof, which on their part are connected by a pulling means (138) such as a cable pull or rods arranged in the inside of the body, that the fastening elements (88) fixed preferably via a line clamp (92) are hinged on the pulling means outside of the base element (68), that the pulling menas, for the rough adjustment of the distance between the fastening means, has first sections (146, 148) which are displaceable to each other, of which one section (146) comprises protrusions and the other section (148) matching recesses, and has second sections (140, 142) for the fine adjustment, which can be connected with each other preferably via a counter-screw socket (144).

## Revendication

1.- Dispositif porteur destiné à recevoir des charges devant être déposées sur le toit d'un véhicule automobile, dispositif comportant de préférence, deux éléments porteurs (116, 118, 126, 128, 136, 138) disposés à une certaine distance l'un de l'autre en direction transversale par rapport au toit du véhicule et reposant sur celui-ci, ces éléments étant de préférence susceptibles d'être respectivement fixés latéralement aux rigoles du toit du véhicule, chaque élément porteur comportant pour abaisser la résistance au déplacement du véhicule, une structure favorisant l'écoulement de l'air, en direction longitudinale de laquelle il est prévu un dispositif récepteur (94), de préférence sous la forme d'un rail profilé, pour recevoir de façon interchangeable des éléments tels que des supports de skis, des supports de planches à surf, des parties de galeries porte-bagages, etc..., un élément en caoutchouc (70) étant disposé au moins partiellement entre le toit du véhicule et l'élément porteur considéré, dispositif porteur caractérisé en ce que chaque élément porteur (116, 118, 126, 128, 136, 138) susceptible d'être fixé au choix aux rigoles du toit du véhicule ou bien aux longerons latéraux (158) du véhicule, comprend un élément de base (68) en forme de plaques et que cet élément de base comporte du côté du toit du véhicule automobile, pour permettre une application étroite sur le toit (122) du véhiicule automobile, au moins dans la zone antérieure et dans la zone latérale, une barrette en caoutchouc (70) absorbant les vibrations et recevant les bords antérieurs et latéraux de l'élément de base, barrette par l'intermédiaire de laquelle les charges sont en principe susceptibles d'être uniquement transmises sur les zones latérales stables du toit du véhicule automobile.

2.- Dispositif porteur selon la revendication 1 caractérisé en ce que respectivement le bord antérieur et le bord latéral (112) de l'élément de base (68), commençant par une partie horizontale externe (176) s'étendant à peu près parallèlement au toit du véhicule, montent ensuite en pente raide (166), tandis que la barrette en caoutchouc (70) comporte côté toit, une partie de fond (172) courbée pour obtenir un effet de succion, avec une branche antérieure (plus longue) et une branche postérieure (plus courte) (174 ou bien 180), la surface externe de la branche postérieure étant de préférence plus abrupte que la surface externe, de préférence ondulée, de la branche antérieure, et ces branches, au-delà d'une zone médiane (168) comportent un espace creux, se prolongeant par les zones supérieures de ces branches qui entourent le bord (112), la zone supérieure de la branche antérieure (174) comportant un renforcement (78) en forme de bourrelet pour permettre d'obtenir une précontrainte en direction de l'élément de base.

3.- Dispositif porteur selon la revendication 1, caractérisé en ce que le dispositif récepteur (94) est un matériau profilé en forme de U, de préférence complétement inséré dans l'élément de base (68), avec les extrémités libres des branches du U en regard l'une de l'autre pour délimiter une fente (96), cette fente étant de préférence élargie au voisinage des extrémités du dispositif récepteur (98).

4.- Dispositif porteur selon la revendication 1, caractérisé en ce que les éléments (72, 186, 192) susceptibles d'être introduites dans le dispositif récepteur (94) sont conformés du côté où arrive l'écoulement d'air de façon à favoriser cet écoulement, chaque élément (72, 186, 192) présentant en coupe une forme de coin, dont la surface (104) du côté de l'arrivée de l'écoulement d'air (surface antérieure) est convexe et dont la surface postérieure est constituée par deux surfaces partielles convexes et/ou à peu près rectilignes ou bien rectilignes, entre lesquelles la transition (en forme de gradin) est une partie horizontale ou à peu près horizontale (106).

5.- Dispositif porteur selon la revendication 1 et/ou la revendication 3, caractérisé en ce que les éléments (72, 186) sont disposés dans la fente (96) à une certaine distance les uns des autres, ces éléments étant susceptibles d'être tendus par su moins un étrier (74, 76) qui s'applique de préférence sur les parties horizontales ou bien à peu près horizontales (106) des éléments, cet étrier revêtant la forme d'un U et comportant sur ses branches libres (114, 118) des extrémités en forme de pieds (78) dont la surface de base respective correspond à peu près au dimensionnement de la fente dans sa zone d'élargissement (98), tandis qu'à chacune de ces extrémités en forme de pieds, se raccorde une partie rétrécie (80) qui permet de déplacer l'étrier le long de la fente.

6.- Dispositif porteur selon la revendication 3 et/ou la revendication 5, caractérisé en ce que les élargissements (98) de la fente sont respectivement disposés à une certaine distance des extrémités de cette fente, le ou les étriers (74, 76) étant susceptibles d'être déplacés dans une partie d'extrémité de la fente de façon qu'un seul des élargissements (98) de la fente soit accessible et éventuellement susceptible d'être fermé.

7.- Dispositif porteur selon la revendication 1, caractérisé en ce que l'élément de base (68) est susceptible d'être fixé sur le toit (122) du véhicule automobile, indirectement ou directement, notamment pour permettre un appui de transmission des charges sur la zone latérale du toit du véhicule, par l'intermédiaire d'éléments de fixation (18, 20, 46, 68; 86, 88, 138) faisant saillie latéralement de la structure ou de l'élément de base à une certaine distance par rapport au toit du véhicule automobile et en étant susceptible d'être déplacés relativement par rapport à celui-ci, par exemple par l'intermédiaire de crochets ou de griffes, ces éléments de fixation étant de leur côté reliée de préférence par l'intermédiaire d'un élément de traction (138) s'étendant à l'intérieur de la structure, tel que par exemple un câble de traction ou bien une tringlerie, les élément de fixation (88) amarrés de préférence par l'intermédiaire d'une portée linéaire (92), sont reliés en dehors de l'élément de base (68) par articulation à l'élément de traction (138), cet élément de base comportant, pour le réglage sommaire de l'intervalle entre les élément de fixation, les premiers tronçons (146, 148), l'un de ces tronçons (146) est porvue de saillies (150) tandis que l'autre tronçon (148) comporte des évidements (152) associés à ces saillies, comportant pour le réglage fin des seconds tronçon (140, 142) qui sont de préférence susceptibles d'être reliés entre eux par l'intermédiaire d'une douille à filets inversés (144).

Fig. 1

Fig. 2

0 065 218

Fig. 3

# Fig. 4

Fig. 5

Fig. 6

Fig. 7